# EUROPEAN PATENT APPLICATION

(11) **EP 4 266 777 A1**
(43) Date of publication of application: **25.10.2023**
(21) Application number: 20965387.2
(22) Date of filing: 15.12.2020
(51) Int. Cl.: H04W 72/04

(54) **METHOD AND APPARATUS FOR TRANSMITTING DATA, COMMUNICATION DEVICE, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Hughes, Andrea Michelle
(86) International application number: PCT/CN2020/136497
(87) International publication number: WO 2022/126369

(57) **Abstract**

A method for transmitting data, which is applied to a terminal. The method comprises: in response to determining that uplink data transmission in a non-connected state fails, retransmitting uplink data on configured retransmission resources, wherein the non-connected state comprises: an idle state or an inactive state.

## Description

### TECHNICAL FIELD

The disclosure relates to, but is not limited to, a field of wireless communication technology, in particular to a method for transmitting data, an apparatus for transmitting data, a communication device, and a storage medium.

### BACKGROUND

In the wireless communication technology, a terminal can operate in either a connected state or a non-connected state. When the terminal operates in a non-connected state, data transmission can still be performed between the terminal and a base station. For example, when the terminal operates in the non-connected state, the terminal can perform small data transmission (SDT).

In the related art, when the terminal is in the non-connected state, there is data loss in the data transmission between the terminal and the base station, resulting in a low reliability of the data transmission.

### SUMMARY

Embodiments of the disclosure provide a method for transmitting data, an apparatus for transmitting data, a communication device, and a storage medium.

According to a first aspect of embodiments of the disclosure, a method for transmitting data is provided. The method is applied in a terminal and includes:
in response to determining that sending uplink data in a non-connected state fails, retransmitting the uplink data on a configured retransmission resource;
in which the non-connected state comprises: an idle state or an inactive state.

According to a second aspect of embodiments of the disclosure, a method for transmitting data is provided. The method is applied to a base station and includes:
in a connected state, sending resource configuration information to a terminal; in which the resource configuration information is used by the terminal to determine a retransmission resource for retransmitting uplink data when determining that sending the uplink data in a non-connected state fails.

According to a third aspect of embodiments of the disclosure, an apparatus for transmitting data is provided. The apparatus is applied in a terminal and includes a retransmitting module.

The retransmitting module is configured to, in response to determining that sending uplink data in a non-connected state fails, retransmit the uplink data on a configured retransmission resource;
in which the non-connected state comprises: an idle state or an inactive state.

According to a fourth aspect of embodiments of the disclosure, an apparatus for transmitting data is provided. The apparatus is applied to a base station and includes a sending module.

The sending module is configured to, in a connected state, send resource configuration information to a terminal; in which, the resource configuration information is used by the terminal to determine a retransmission resource for retransmitting uplink data when determining that sending the uplink data in a non-connected state fails.

According to a fifth aspect of embodiments of the disclosure, a communication device is provided. The communication device includes:
a processor; and
a memory for storing instructions executable by the processor.

The processor is configured to implement the method according to any of the embodiments of the disclosure when the executable instructions are executed.

According to a sixth aspect of embodiments of the disclosure, a computer storage medium having computer-executable instructions stored thereon is provided. When computer-executable instructions are executed by a processor, the method according to any of the embodiments of the disclosure is implemented.

In the embodiment, in response to determining that sending the uplink data in the non-connected state fails, the uplink data is retransmitted on the configured retransmission resource. In this way, when the terminal fails to send the uplink data in the non-connected state, it can retransmit the uplink data on the configured retransmission resource. Compared with a way of failing to retransmit the uplink data when sending the uplink data in the non-connected state fails, a probability that a base station successfully receives the uplink data can be increased, an occurrence of a situation of loss of the uplink data may be reduced, thus improving a reliability of the terminal sending the uplink data in the non-connected state.

### BRIEF DESCRIPTION OF THE DRAWINGS

FIG. 1 is a schematic diagram of a wireless communication system.
FIG. 2 is a flowchart of a method for transmitting data according to an exemplary embodiment of the disclosure.
FIG. 3 is a flowchart of a method for transmitting data according to an exemplary embodiment of the disclosure.
FIG. 4 is a flowchart of a method for transmitting data according to an exemplary embodiment of the disclosure.
FIG. 5 is a flowchart of a method for transmitting data according to an exemplary embodiment of the disclosure.
FIG. 6 is a flowchart of a method for transmitting data according to an exemplary embodiment of the disclosure.
FIG. 7 is a schematic diagram of a method for transmitting data according to an exemplary embodiment of the disclosure.
FIG. 8 is a schematic diagram of a method for transmitting data according to an exemplary embodiment of the disclosure.
FIG. 9 is a schematic diagram of a method for transmitting data according to an exemplary embodiment of the disclosure.
FIG. 10 is a flowchart of a method for transmitting data according to an exemplary embodiment of the disclosure.
FIG. 11 is a flowchart of a method for transmitting data according to an exemplary embodiment of the disclosure.
FIG. 12 is a flowchart of a method for transmitting data according to an exemplary embodiment of the disclosure.
FIG. 13 is a flowchart of a method for transmitting data according to an exemplary embodiment of the disclosure.
FIG. 14 is a flowchart of a method for transmitting data according to an exemplary embodiment of the disclosure.
FIG. 15 is a flowchart of a method for transmitting data according to an exemplary embodiment of the disclosure.
FIG. 16 is a flowchart of a method for transmitting data according to an exemplary embodiment of the disclosure.
FIG. 17 is a flowchart of a method for transmitting data according to an exemplary embodiment of the disclosure.
FIG. 18 is a flowchart of a method for transmitting data according to an exemplary embodiment of the disclosure.
FIG. 19 is a schematic diagram of a method for transmitting data according to an exemplary embodiment of the disclosure.
FIG. 20 is a block diagram of an apparatus for transmitting data according to an exemplary embodiment of the disclosure.
FIG. 21 is a block diagram of an apparatus for transmitting data according to an exemplary embodiment of the disclosure.
FIG. 22 is a block diagram of a terminal according to an exemplary embodiment of the disclosure.
FIG. 23 is a block diagram of a base station according to an exemplary embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in this disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

For the purpose of brevity and ease of understanding, the terms "greater than" or "less than" are used herein when representing the relationship of size. However, those skilled in the art can understand that the term "greater than" also covers the meaning of "greater than or equal to", and the term "less than" also covers the meaning of "less than or equal to".

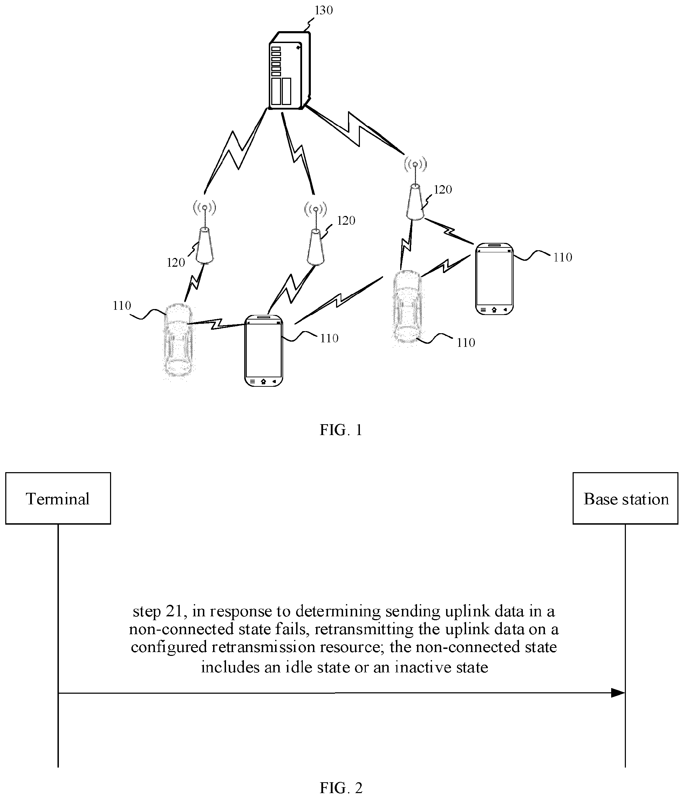

Please refer to FIG. 1, which shows a schematic diagram of a wireless communication system according to an embodiment of the disclosure. As shown in FIG. 1, the wireless communication system may include: several user equipment 110 and several base stations 120.

The user equipment 110 may be a device that provides voice and/or data connectivity to a user. The user equipment 110 may communicate with one or more core networks via a Radio Access Network (RAN), the user equipment 110 may be an Internet Of Things terminal, such as a sensor device, a mobile phone (or referred to as "cellular" phone) and a computer with an Internet Of Things terminal, for example, which may be a fixed, portable, pocket, hand-held, computer built-in or Vehicle-mounted apparatus such as a Station (STA), a subscriber unit, a subscriber station, a mobile station, a mobile, a remote station, an access point, a remote terminal, an access terminal, a user terminal, a user agent, a user device, or user equipment (UE). Alternatively, the user equipment 110 may also be a device of an unmanned aerial vehicle. Alternatively, the user equipment 110 may also be a vehicle-mounted device, for example, may be a trip computer with a wireless communication function, or a wireless communication device connected externally to the trip computer. Alternatively, the user equipment 110 may also be a roadside device, for example, may be a street lamp, a signal lamp, or another roadside device with a wireless communication function, and the like.

The base station 120 may be a network side device in the wireless communication system. The wireless communication system may be a fourth-generation mobile communication technology (the 4th generation mobile communication, 4G) system, also referred to as a Long-Term Evolution (LTE) system; alternatively, the wireless communication system may also be a 5G system, also referred to as a new air interface (new radio, NR) system or a 5G NR system. Alternatively, the wireless communication system may also be a next-generation system of the 5G system. The access network in the 5G system may be referred to as NG-RAN (New Generation-Radio Access Network).

The base station 120 may be an evolved base station (eNB) adopted in the 4G system. Alternatively, the base station 120 may also be a base station (gNB) adopting a centralized and distributed architecture in the 5G system. When the base station 120 adopts the centralized and distributed architecture, it generally includes a central unit (CU) and at least two distributed units (DU). The central unit is provided with a protocol stack with a Packet Data Convergence Protocol (PDCP) layer, a radio link layer control protocol (Radio Link Control, RLC) layer, a Media Access Control (MAC) layer; the distributed unit is provided with a protocol stack with a Physical (PHY) layer, and the embodiments of the present disclosure do not limit the specific implementation manner of the base station 120.

A wireless connection can be established between the base station 120 and the user equipment 110 through a wireless air interface. In different implementation manners, the wireless air interface is a wireless air interface based on the fourth generation mobile communication network technology (4G) standard; alternatively, the wireless air interface is a wireless air interface based on the fifth generation mobile communication network technology (5G) standard, for example, the wireless air interface is a new air interface; alternatively, the wireless air interface may also be a wireless air interface based on a mobile communication network technical standard of the next-generation of 5G.

In some embodiments, an E2E (End to End) connection may also be established between the user equipment 110. For example, for scenarios of V2V (vehicle to vehicle) communication, V2I (vehicle to Infrastructure, vehicle-to-roadside devices) communication, V2P (vehicle to pedestrian) communication in vehicle to everything (V2X) communication, and the like.

Here, the above user equipment may be regarded as a terminal device in the following embodiments.

In some embodiments, the above wireless communication system may further include a network management device 130.

The several base stations 120 are connected to the network management device 130 respectively. The network management device 130 may be a core network device in the wireless communication system, for example, the network management device 130 may be a Mobility Management Entity (MME) in an Evolved Packet Core (EPC). Alternatively, the network management device may also be other core network devices, such as Serving GateWay (SGW), Public Data Network GateWay (PGW), Policy and Charging Rules Function (PCRF) or Home Subscriber Server (HSS), and the like. The implementation form of the network management device 130 will not be limited by the embodiments of the present disclosure.

In order to better understand the technical solutions described in any of the embodiments of the disclosure, first, an application scenario of data transmission between a terminal and a base station is described.

In an embodiment, when the terminal is in an idle state or an inactive state, the terminal may send data to the base station by one of the following transmission modes:
sending the data through a third message (Msg3) of a 4-step random access procedure of an initial access;
sending the data through an A message (MsgA) of a 2-step random access procedure of an initial access;
sending the data on a dedicated physical uplink shared channel (PUSCH) resource configured by the base station.

In an embodiment, the dedicated PUSCH resource includes: a configure grant (CG) resource and/or a pre-allocated uplink resource (PUR).

In an embodiment, when the terminal is in an idle state or an inactive state, the base station may send data to the terminal by one of the following transmission modes:
sending the data through a fourth message (Msg4) of a 4-step random access procedure of an initial access;
sending the data through a B message (MsgB) of a 2-step random access procedure of an initial access;
sending the data on a downlink feedback resource corresponding to the dedicated PUSCH resource configured by the base station.

In one embodiment, after the terminal sends the data on the dedicated PUSCH resource configured by the base station, the terminal receives feedback information from the base station within a first time range.

In one embodiment, in response to the terminal not receiving the feedback information from the base station within the first time range, the terminal determines that sending the uplink data fails; in response to the terminal receiving the feedback information from the base station within the first time range, the terminal determines that the uplink data is sent successfully.

In one embodiment, when data is transmitted at a high speed, a reliability of data transmission is improved by using a hybrid automatic repeat request (HARQ).

In one embodiment, in a process of transmitting data based on the HARQ, a sending end sends the data, and a receiving end decodes the received data and performs cyclic redundancy check (CRC) check. If the check is correct, the receiving end returns an acknowledge character (ACK), and the sending end sends new data; if the check is incorrect, the receiving end returns a negative ACK (NACK), and the sending end retransmits the data.

In one embodiment, in response to the sending end receiving the ACK, it is determined that the receiving end has correctly received the data.

In one embodiment, in response to determining that the receiving end has correctly received the data, the sending end deletes relevant information of the data and sends new data.

In one embodiment, in response to the sending end receiving the NACK, it is determined that the receiving end fails to receive the data correctly, and the sending end retransmits the data.

In one embodiment, in response to a number of retransmissions of the data being less than a preset number of retransmissions, the data is retransmitted; in response to the number of retransmissions of the data being greater than the preset number of retransmissions, retransmitting the data is stopped and new data is sent.

In one embodiment, the base station configures a semi-static uplink data channel sending resource for the terminal through signaling. Here, the signaling may be radio resource control (RRC) signaling, media access control (MAC) signaling, or downlink control information (DCI) signaling.

In an embodiment, the configuration of the uplink data channel sending resource includes at least one of the following:
a resource allocation period (periodicity);
a resource allocation starting position (timeDomainOffset);
a total number (nrofHARQ-Processes) of available HARQ processes;
a starting number (harq-ProcID-Offset) of the available HARQ processes.

In one embodiment, the terminal may determine a position of an available uplink data channel sending resource according to the resource allocation period and the resource allocation starting position.

In one embodiment, the terminal may determine a process number of an available HARQ process corresponding to each uplink data channel sending resource by using the total number of available HARQ processes and the starting number of the available HARQ processes.

As illustrated in FIG. 2, the embodiment provides a method for transmitting data. The method is applied to a terminal and includes the following.

At step 21, in response to determining sending uplink data in a non-connected state fails, the uplink data is retransmitted on a configured retransmission resource.

The non-connected state includes an idle state or an inactive state.

In one embodiment, the terminal may send the uplink data to the base station.

In some embodiments, the terminal may be, but is not limited to, a mobile phone, a wearable device, a vehicle-mounted terminal, a road side unit (RSU), a smart home terminal, an industrial sensing device, and other terminal.

The base station is an interface device for the terminal to access the network.

In some embodiments, the base station may be various types of base stations, for example, a base station of a third-generation mobile communication (3G) network, a base station of a 4G network, a base station of a 5G network or other evolved base station.

In one embodiment, retransmitting the uplink data may refer to repeatedly transmitting the same uplink data. For example, the terminal repeatedly transmits data A to the base station.

In one embodiment, the number of times of repeatedly transmitting the same uplink data is considered as the number of retransmissions. For example, if the terminal fails to transmit the data A to the base station and repeatedly transmits the data A for three times, then the number of retransmissions is three.

In one embodiment, the number of times that the terminal repeatedly transmits the uplink data is not greater than the number of retransmissions.

Here, repeatedly transmitting the same uplink data can increase a probability that the base station successfully receives the uplink data sent by the terminal, and reduce an occurrence of a situation of loss of the uplink data caused by unsuccessful data transmission, thus improving a reliability of uplink data transmission.

In one embodiment, in response to the terminal sending data in the idle state and sending the uplink data failing, the uplink data is retransmitted on the configured retransmission resource in the idle state.

In one embodiment, in response to the terminal sending data in the inactivate state and sending the uplink data failing, the uplink data is retransmitted on the configured retransmission resource in the inactivate state.

In an embodiment, in the non-connected state, the terminal sends the uplink data to the base station in one of the following ways.

The terminal sends the uplink data to the base station through a Msg3 of a 4-step random access procedure of an initial access.

The terminal sends the uplink data to the base station through a MsgA of a 2-step random access procedure of an initial access.

The terminal sends the uplink data to the base station on a dedicated PUSCH resource configured by the base station.

In one embodiment, the dedicated PUSCH resource includes: a CG resource and/or a PUR.

In one embodiment, the uplink data may be sent or retransmitted by using the HARQ process.

In an embodiment, the terminal receives resource configuration information for sending or retransmitting the uplink data configured by the base station for the terminal through signaling. Here, the signaling may be RRC signaling, MAC signaling, or DCI signaling.

In one embodiment, the resource configuration information includes at least one of the following:
an allocation period of a dedicated uplink resource;
an allocation starting position of the dedicated uplink resource; in which, the allocation starting position includes: a time domain position and/or a frequency domain position;
a total number of configured hybrid automatic repeat request (HARQ) processes;
a starting number of the configured HARQ processes.

In one embodiment, the terminal determines a resource position of the resource for sending or retransmitting the uplink data according to the allocation period of the dedicated uplink resource and the allocation starting position of the dedicated uplink resource.

In this way, the terminal can send or retransmit the uplink data at the resource position.

In one embodiment, the retransmission resource is a resource corresponding to a HARQ process used when sending the uplink data fails.

In one embodiment, the retransmission resource is a resource of any HARQ process among the multiple configured HARQ processes.

In one embodiment, the retransmission resource is a resource of any HARQ process among the configured HARQ processes which are not used.

In one embodiment, the retransmission resource is a resource indicated by a resource configuration corresponding to a resource used when sending the uplink data fails.

In one embodiment, the retransmission resource is a resource indicated by a candidate resource configuration in multiple sets of resource configurations; in which, an amount of data that can be sent by the resource indicated by the candidate resource configuration is the same as an amount of data that can be sent by the resource used when sending the uplink data fails.

In one embodiment, the retransmission resource is a resource indicated by any one of the multiple sets of resource configurations.

In one embodiment, the terminal may determine a process number of an available HARQ process corresponding to each uplink data channel sending resource based on the total number of configured HARQ processes and the starting number of the configured HARQ processes.

In this way, the uplink data can be sent or retransmitted by using the HARQ process.

In an embodiment, the configured retransmission resource may be indicated by configuration information sent by the base station to the terminal in the connected state.

In one embodiment, before the terminal retransmits the uplink data, the configuration information indicating the configured retransmission resource is received.

In one embodiment, in response to not receiving feedback information sent by the base station for the uplink data within a first time period after sending the uplink data, it is determined that sending the uplink data to the base station fails; or, in response to receiving the feedback information sent by the base station for the uplink data within the first time period after sending the uplink data, it is determined that the uplink data is successfully sent to the base station.

In one embodiment, the first time period may be a preconfigured time period.

In one embodiment, the first time period may also be a time period determined in real time according to a transmission scenario.

For example, if a delay requirement required by the real-time transmission scenario is greater than a quality threshold, the first time period may be set to A in real time.

In one embodiment, in response to receiving feedback information indicating that sending the uplink data fails sent by the base station, it is determined that sending the uplink data to the base station fails; or, in response to receiving the feedback information indicating that sending the uplink data is successful sent by the base station, it is determined that the uplink data is successfully transmitted to the base station.

In one embodiment, the configured retransmission resource may be a pre-set retransmission resource before the retransmission.

In one embodiment, the configured retransmission resource may be a retransmission resource set in real time according to the transmission scenario.

For example, if a quality of service (QoS) requirement of the real-time transmission scenario is greater than a quality threshold, the retransmission resource may be set as the first resource in real time.

In the embodiment of the disclosure, in response to determining that sending the uplink data in the non-connected state fails, the uplink data is retransmitted on the configured retransmission resource. In this way, when the terminal fails to send the uplink data in the non-connected state, it can retransmit the uplink data on the configured retransmission resource. Compared with a way of failing to retransmit the uplink data when sending the uplink data in the non-connected state fails, a probability that a base station successfully receives the uplink data can be increased, an occurrence of a situation of loss of the uplink data may be reduced, thus improving a reliability of the terminal sending the uplink data in the non-connected state.

It should be noted that those skilled in the art can understand that the method provided in the embodiment of the present disclosure may be executed alone, or may be executed together with some methods in the embodiments of the present disclosure or some methods in related technologies.

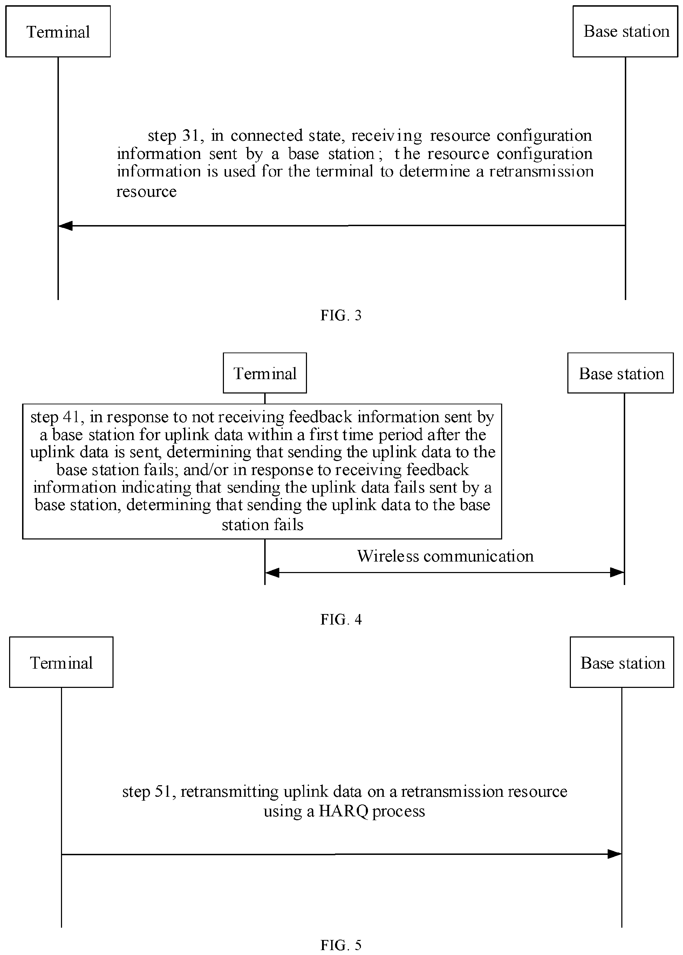

As illustrated in FIG. 3, the embodiment provides a method for transmitting data. The method is applied to a terminal and includes the following.

At step 31, in connected state, resource configuration information sent by a base station is received.

The resource configuration information is used for the terminal to determine a retransmission resource.

In one embodiment, the resource configuration information sent by the base station through signaling may be received in the connected state. In this way, a signaling compatibility of the signaling can be improved. Here, the signaling may be RRC signaling, MAC signaling, or DCI signaling.

In one embodiment, the resource configuration information includes at least one of the following:
an allocation period of a dedicated uplink resource;
an allocation starting position of the dedicated uplink resource; in which, the allocation starting position includes: a time domain position and/or a frequency domain position;
a total number of configured hybrid automatic repeat request (HARQ) processes;
a starting number of the configured HARQ processes.

In one embodiment, the terminal determines a resource position of the resource for sending or retransmitting the uplink data according to the allocation period of the dedicated uplink resource and the allocation starting position of the dedicated uplink resource.

In one embodiment, the terminal may determine a process number of an available HARQ process corresponding to each uplink data channel sending resource based on a total number of configured HARQ processes and a starting number of the configured HARQ processes.

It should be noted that those skilled in the art can understand that the method provided in the embodiment of the present disclosure may be executed alone, or may be executed together with some methods in the embodiments of the present disclosure or some methods in related technologies.

As illustrated in FIG. 4, the embodiment provides a method for transmitting data. The method is applied to a terminal and includes the following.

At step 41, in response to not receiving feedback information sent by a base station for uplink data within a first time period after the uplink data is sent, it is determined that sending the uplink data to the base station fails; and/or in response to receiving feedback information indicating that sending the uplink data fails sent by a base station, it is determined that sending the uplink data to the base station fails.

In one embodiment, in response to the base station receiving the uplink data at a predetermined resource position, the base station sends feedback information indicating that the uplink data is received to the terminal; in response to the base station not receiving the uplink data at the predetermined resource position, the base station does not send the feedback information indicating that the uplink data is received to the terminal.

In one embodiment, in response to the base station not receiving the uplink data at the predetermined resource position, the base station sends feedback information indicating that the uplink data is not received to the terminal; in response to the base station receiving the uplink data at a predetermined resource position, the base station sends the feedback information indicating that the uplink data is received to the terminal.

It should be noted that those skilled in the art can understand that the method provided in the embodiment of the present disclosure may be executed alone, or may be executed together with some methods in the embodiments of the present disclosure or some methods in related technologies.

As illustrated in FIG. 5, the embodiment provides a method for transmitting data. The method is applied to a terminal and includes the following.

At step 51, uplink data is retransmitted on a retransmission resource using a HARQ process.

In one embodiment, the terminal may determine a process number of an available HARQ process corresponding to each uplink data channel sending resource based on a total number of configured HARQ processes and a starting number of the configured HARQ processes.

In this way, the uplink data can be sent or retransmitted by using the HARQ process.

In one embodiment, the retransmission resource is a resource corresponding to a HARQ process used when sending the uplink data fails.

In one embodiment, the retransmission resource is a resource of any HARQ process among the multiple configured HARQ processes.

In one embodiment, the retransmission resource is a resource of any HARQ process among the configured HARQ processes which are not used.

In one embodiment, the retransmission resource is a resource indicated by a resource configuration corresponding to a resource used when sending the uplink data fails.

In one embodiment, the retransmission resource is a resource indicated by a candidate resource configuration in multiple sets of resource configurations; in which, an amount of data that can be sent by the resource indicated by the candidate resource configuration is the same as an amount of data that can be sent by the resource used when sending the uplink data fails.

In one embodiment, the retransmission resource is a resource indicated by any one of the multiple sets of resource configurations.

It should be noted that those skilled in the art can understand that the method provided in the embodiment of the present disclosure may be executed alone, or may be executed together with some methods in the embodiments of the present disclosure or some methods in related technologies.

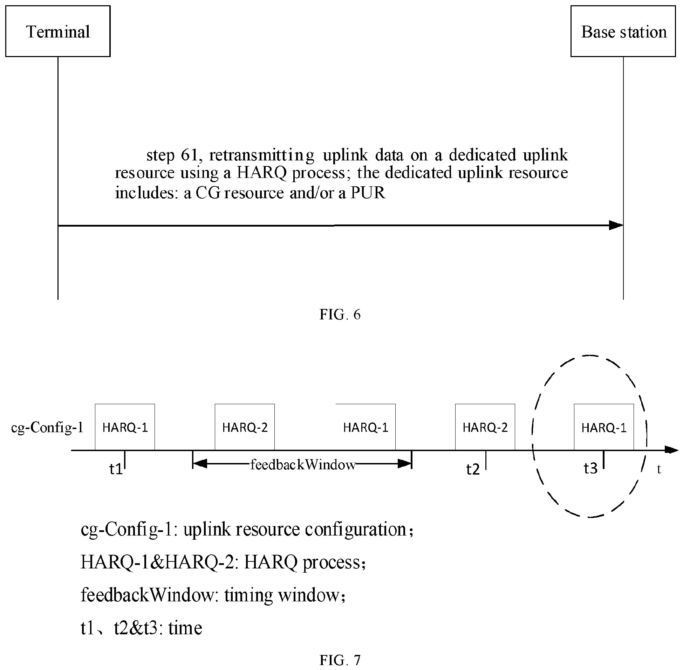

As illustrated in FIG. 6, the embodiment provides a method for transmitting data. The method is applied to a terminal and includes the following.

At step 61, uplink data is retransmitted on a dedicated uplink resource using a HARQ process.

The dedicated uplink resource includes: a CG resource and/or a PUR.

In one embodiment, the dedicated uplink resource includes:
a dedicated uplink resource corresponding to a HARQ process used when sending the uplink data fails;
   or
a dedicated uplink resource corresponding to any one of multiple configured HARQ processes;
   or
a dedicated uplink resource corresponding to any one of configured HARQ processes which are not used.

In one embodiment, referring to FIG. 7, the terminal sends the uplink data through the HARQ process HARQ-1 of the resource configuration cg-Config-1 at time t1.

In an embodiment, referring to FIG. 7 again, after the terminal determines that sending the uplink data fails, although an uplink sending resource indicated by the resource configuration cg-Config-1 at time t2 is closest to the time point when the terminal determines that sending the uplink data fails, the terminal does not use the HARQ process HARQ-2 at time t2 to retransmit the uplink data, but uses the HARQ process HARQ-1 at time t3 to retransmit the uplink data.

In one embodiment, referring to FIG. 7 again, the resource at time t3 is the resource corresponding to the HARQ process HARQ-1 that is closest to the time point when the terminal determines that sending the uplink data fails among the multiple resources corresponding to the HARQ process HARQ-1.

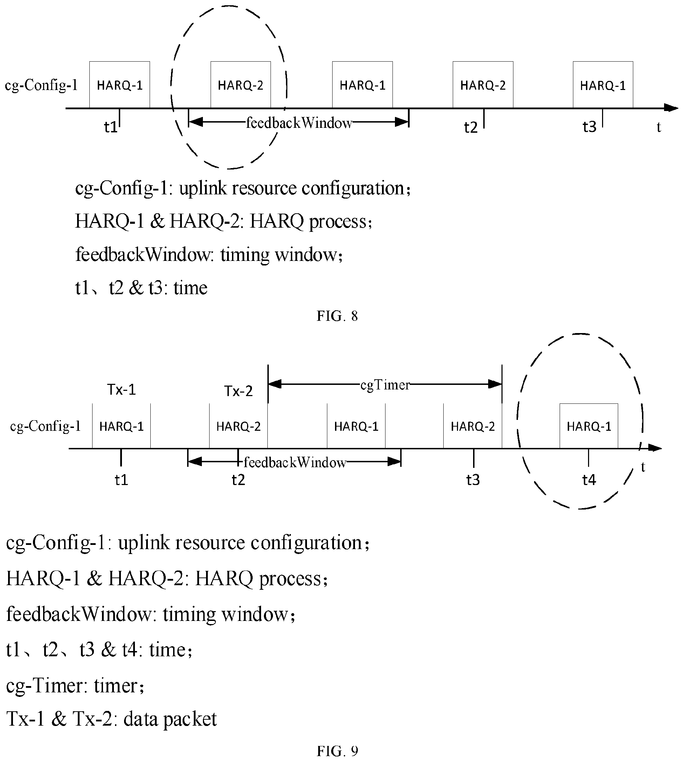

In one embodiment, referring to FIG. 8, the terminal sends the uplink data through the HARQ process HARQ-1of the resource configuration cg-Config-1 at time t1.

In one embodiment, referring to FIG. 8 again, after the terminal determines that sending the uplink data fails, an uplink sending resource indicated by the resource configuration cg-Config-1 at time t2 is closest to the time point when the terminal determines that sending the uplink data fails, the terminal retransmits the uplink data using the HARQ process HARQ-2 at time t2.

In an embodiment, referring to FIG. 9, the terminal sends the uplink data through the HARQ process HARQ-1 indicated by the resource configuration cg-Config-1 at time t1.

In one embodiment, referring to FIG. 9 again, the terminal sends the uplink data through the HARQ process HARQ-2 of the resource configuration cg-Config-1 at time t2. Here, the terminal starts a timer of the HARQ process HARQ-2, for example, a cgTimer. During the running of the timer, the terminal cannot use the HARQ-2 of the cg-Config-1 to send new data.

In an embodiment, referring to FIG. 9 again, after the terminal determines that sending the uplink data fails, an uplink sending resource indicated by the resource configuration cg-Config-1 at time t3 is closest to the time point when the terminal determines that sending the uplink data fails, the HARQ process HARQ-2 cannot be used to send new data (here, the timer cgTimer of the HARQ process HARQ-2 may be running), and the terminal uses the HARQ process HARQ-1 at time t4 to retransmit the uplink data.

It should be noted that those skilled in the art can understand that the method provided in the embodiment of the present disclosure may be executed alone, or may be executed together with some methods in the embodiments of the present disclosure or some methods in related technologies.

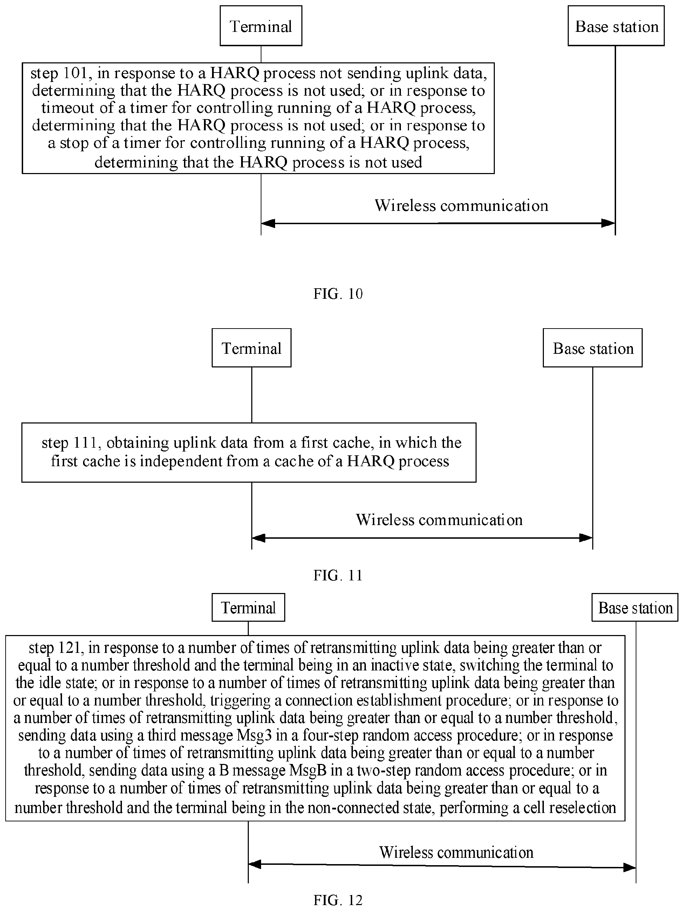

As illustrated in FIG. 10, the embodiment provides a method for transmitting data. The method is applied to a terminal and includes the following.

At step 101, in response to a HARQ process not sending uplink data, it is determined that the HARQ process is not used;
or
in response to timeout of a timer for controlling running of a HARQ process, it is determined that the HARQ process is not used;
   or
in response to a stop of a timer for controlling running of a HARQ process, it is determined that the HARQ process is not used.

In one embodiment, if the HARQ process is not used, the HARQ process does not send the uplink data.

In one embodiment, if the HARQ process is not used after sending the uplink data, the timer of the HARQ process is in a timeout state.

In one embodiment, if the HARQ process is not used, the timer of the HARQ process stops running.

It should be noted that those skilled in the art can understand that the method provided in the embodiment of the present disclosure may be executed alone, or may be executed together with some methods in the embodiments of the present disclosure or some methods in related technologies.

In one embodiment, the resource configuration information carries multiple sets of resource configurations. The dedicated uplink resource includes:
a dedicated uplink resource indicated by a resource configuration corresponding to a dedicated uplink resource used when sending the uplink data fails;
   or
a dedicated uplink resource indicated by a candidate resource configuration in the multiple sets of resource configurations, in which an amount of data that can be sent by the dedicated uplink resource indicated by the candidate resource configuration is the same as an amount of data that can be sent by the dedicated uplink resource used when sending the uplink data fails;
   or
a dedicated uplink resource indicated by any resource configuration in the multiple sets of resource configurations.

In one embodiment, after the terminal determines that sending the uplink data on the dedicated uplink resource indicated by the resource configuration cg-Config-1 fails, the dedicated uplink resource for retransmission by the terminal is also the dedicated uplink resource indicated by the resource configuration cg-Config-1.

In one embodiment, the base station configures three sets of dedicated uplink resource configurations for the terminal, for example, cg-Config-1, cg-Config-2 and cg-Config-3, respectively.

In one embodiment, after the terminal determines that sending the uplink data on the dedicated uplink resource indicated by the cg-Config-1 fails, the terminal may use the dedicated uplink resources indicated by the cg-Config-2 and the cg-Config-1 to retransmit the uplink data that fails to be sent on the dedicated uplink resource indicated by the cg-Config-1. The amounts of uplink data that can be sent by the dedicated uplink resources indicated by the cg-Config-2 and the cg-Config-1 are the same, and the amounts of uplink data that can be sent by the dedicated uplink resources indicated by the cg-Config-3 and the cg-Config-1 are different.

In one embodiment, after the terminal determines that sending data on the dedicated uplink resource indicated by the cg-Config-1 fails, the terminal may use the dedicated uplink resource indicated by any of the cg-Config-1, the cg-Config-2 and the cg-Config-3 to retransmit the uplink data that fails to be sent on the dedicated uplink resource indicated by the cg -Config-1.

In one embodiment, the base station configures two sets of dedicated uplink resource configurations for the terminal, for example, cg-Config-1 and cg-Config-2, the amount of data that can be sent by the dedicated uplink resource configured by the cg-Config-2 is 50 bytes, and the amount of data that can be sent by the dedicated uplink resource configured by the Config-1 is 20 bytes. When the terminal sends the uplink data through the dedicated uplink resource indicated by the cg-Config-1, the terminal generates a 20-byte medium access control (MAC) protocol data unit (PDU). After the terminal determines that sending the uplink data on the dedicated uplink resource indicated by the cg-Config-1 fails, the terminal uses the dedicated uplink resource indicated by the cg-Config-2 to retransmit the uplink data that fails to be sent on the dedicated uplink resource indicated by the cg-Config-1. The terminal may reconstruct the 20-byte MAC PDU to generate a 50-byte MAC PDU for retransmission. Here, it should be noted that the reconstruction process includes: reconstruction of the 20-byte MAC PDU that fails to be sent.

It should be noted that those skilled in the art can understand that the method provided in the embodiment of the present disclosure may be executed alone, or may be executed together with some methods in the embodiments of the present disclosure or some methods in related technologies.

As illustrated in FIG. 11, the embodiment provides a method for transmitting data. The method is applied to a terminal and includes the following.

At step 111, uplink data is obtained from a first cache, in which the first cache is independent from a cache of a HARQ process.

In one embodiment, different HARQ processes are configured with different caches.

In one embodiment, the first cache is a preconfigured cache.

In one embodiment, the first cache may be a cache determined in real time according to a transmission scenario.

For example, the number of caches required by a real-time transmission scenario is A, and the number of caches can be set to A in real time.

In one embodiment, the terminal buffers the uplink data to be sent in the first cache.

In one embodiment, in response to the terminal needing to send or retransmit data every time, the uplink data is retrieved from the first cache and then the uplink data is sent through the selected HARQ process.

Here, since the first cache is independent from the cache of the HARQ process, there is no need to obtain the data that needs to be retransmitted from the cache of the HARQ process. Therefore, the original data to be retransmitted can be directly obtained without decoding through the HARQ process, which can reduce a retransmission delay.

It should be noted that those skilled in the art can understand that the method provided in the embodiment of the present disclosure may be executed alone, or may be executed together with some methods in the embodiments of the present disclosure or some methods in related technologies.

As illustrated in FIG. 12, the embodiment provides a method for transmitting data. The method is applied to a terminal and includes the following.

At step 121, in response to a number of times of retransmitting uplink data being greater than or equal to a number threshold and the terminal being in an inactive state, the terminal is switched to the idle state;
or
in response to a number of times of retransmitting uplink data being greater than or equal to a number threshold, a connection establishment procedure is triggered;
   or
in response to a number of times of retransmitting uplink data being greater than or equal to a number threshold, data is sent using a third message Msg3 in a four-step random access procedure;
   or
in response to a number of times of retransmitting uplink data being greater than or equal to a number threshold, data is sent using a B message MsgB in a two-step random access procedure;
   or
in response to a number of times of retransmitting uplink data being greater than or equal to a number threshold and the terminal being in the non-connected state, a cell reselection is performed.

In one embodiment, the number threshold may be determined according to a required delay of data transmission.

In one embodiment, in response to the required delay of data transmission being greater than a delay threshold, the number threshold is determined to be greater than A; in response to the required delay of data transmission being less than the delay threshold, the number threshold is determined to be less than A. In this way, the delay threshold can be adapted to the required delay of data transmission.

In one embodiment, after the terminal is switched to the idle state, the terminal can be switched from the idle state to the connected state, and use a connection in the connected state to retransmit the uplink data.

In one embodiment, after the terminal establishes a connection, the connection can be used to retransmit the uplink data.

In one embodiment, after the terminal performs a cell reselection, the terminal retransmits the uplink data in the reselected cell in an inactive state or an idle state.

It should be noted that those skilled in the art can understand that the method provided in the embodiment of the present disclosure may be executed alone, or may be executed together with some methods in the embodiments of the present disclosure or some methods in related technologies.

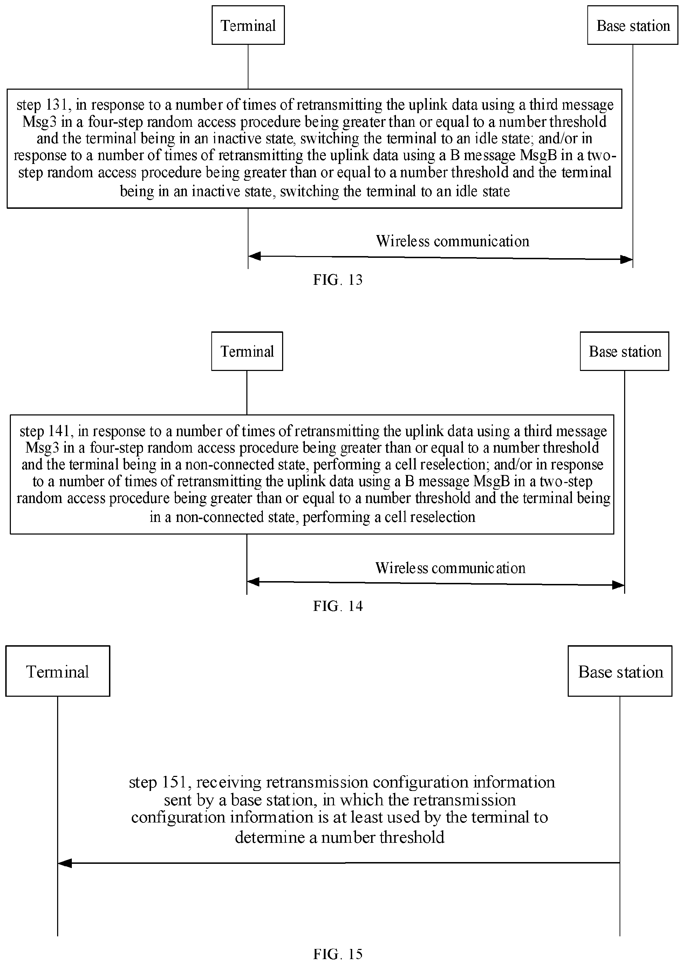

As illustrated in FIG. 13, the embodiment provides a method for transmitting data. The method is applied to a terminal and includes the following.

At step 131, in response to a number of times of retransmitting the uplink data using a third message Msg3 in a four-step random access procedure being greater than or equal to a number threshold and the terminal being in an inactive state, the terminal is switched to an idle state;
and/or
in response to a number of times of retransmitting the uplink data using a B message MsgB in a two-step random access procedure being greater than or equal to a number threshold and the terminal being in an inactive state, the terminal is switched to an idle state.

In one embodiment, after the terminal is switched to the idle state, the terminal can be switched from the idle state to the connected state, and use a connection in the connected state to retransmit the uplink data.

It should be noted that those skilled in the art can understand that the method provided in the embodiment of the present disclosure may be executed alone, or may be executed together with some methods in the embodiments of the present disclosure or some methods in related technologies.

As illustrated in FIG. 14, the embodiment provides a method for transmitting data. The method is applied to a terminal and includes the following.

At step 141, in response to a number of times of retransmitting the uplink data using a third message Msg3 in a four-step random access procedure being greater than or equal to a number threshold and the terminal being in a non-connected state, a cell reselection is performed;
and/or
in response to a number of times of retransmitting the uplink data using a B message MsgB in a two-step random access procedure being greater than or equal to a number threshold and the terminal being in a non-connected state, a cell reselection is performed.

In one embodiment, after the terminal performs a cell reselection, the terminal retransmits the uplink data in the reselected cell in an inactive state or an idle state.

It should be noted that those skilled in the art can understand that the method provided in the embodiment of the present disclosure may be executed alone, or may be executed together with some methods in the embodiments of the present disclosure or some methods in related technologies.

As illustrated in FIG. 15, the embodiment provides a method for transmitting data. The method is applied to a terminal and includes the following.

At step 151, retransmission configuration information sent by a base station is received, in which the retransmission configuration information is at least used by the terminal to determine a number threshold.

In one embodiment, the number threshold may be determined according to a required delay of data transmission.

In one embodiment, in response to the required delay of data transmission being greater than a delay threshold, the number threshold is determined to be greater than A; in response to the required delay of data transmission being less than the delay threshold, the number threshold is determined to be less than A. In this way, the delay threshold can be adapted to the required delay of data transmission.

It should be noted that those skilled in the art can understand that the method provided in the embodiment of the present disclosure may be executed alone, or may be executed together with some methods in the embodiments of the present disclosure or some methods in related technologies.

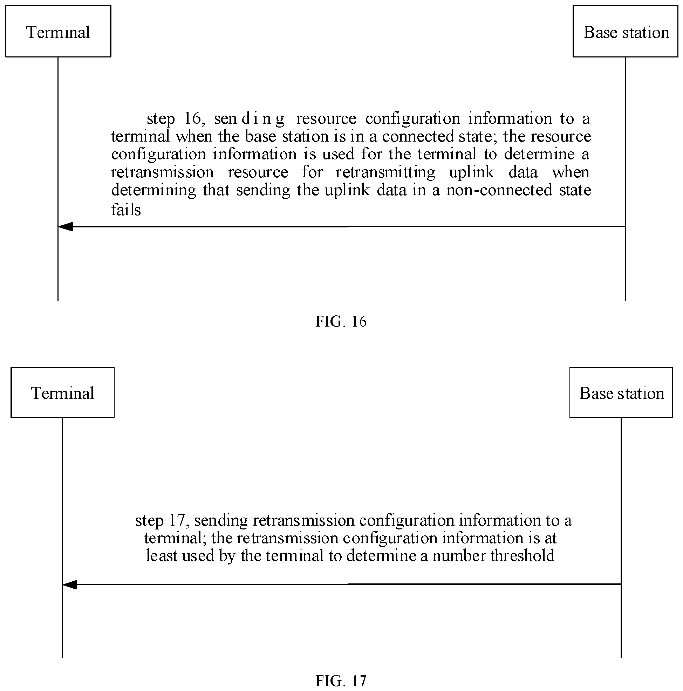

As illustrated in FIG. 16, the embodiment provides a method for transmitting data. The method is applied to a base station and includes the following.

At step 16, resource configuration information is sent to a terminal when the base station is in a connected state.

The resource configuration information is used for the terminal to determine a retransmission resource for retransmitting uplink data when determining that sending the uplink data in a non-connected state fails.

In one embodiment, the terminal may send the uplink data to the base station.

In some embodiments, the terminal may be, but is not limited to, a mobile phone, a wearable device, a vehicle-mounted terminal, a road side unit (RSU), a smart home terminal, an industrial sensing device, and other terminal.

The base station is an interface device for the terminal to access the network.

In some embodiments, the base station may be various types of base stations, for example, a base station of a third-generation mobile communication (3G) network, a base station of a 4G network, a base station of a 5G network or other evolved base station.

In one embodiment, retransmitting the uplink data may refer to repeatedly transmitting the same uplink data. For example, the terminal repeatedly transmits data A to the base station.

In one embodiment, the number of times of repeatedly transmitting the same uplink data is considered as the number of retransmissions. For example, if the terminal fails to transmit the data A to the base station and repeatedly transmits the data A for three times, then the number of retransmissions is three.

Here, repeatedly transmitting the same uplink data can increase a probability that the base station successfully receives the uplink data sent by the terminal, and reduce an occurrence of a situation of loss of the uplink data caused by unsuccessful data transmission, thus improving a reliability of uplink data transmission.

In one embodiment, in response to the terminal sending data in the idle state and sending the uplink data failing, the uplink data is retransmitted on a configured retransmission resource in the idle state.

In one embodiment, in response to the terminal sending data in the inactivate state and sending the uplink data failing, the uplink data is retransmitted on the configured retransmission resource in the inactivate state.

In an embodiment, in a non-connected state, the terminal sends the uplink data to the base station in one of the following ways.

The terminal sends the uplink data to the base station through a Msg3 of a 4-step random access procedure of an initial access.

The terminal sends the uplink data to the base station through a MsgA of a 2-step random access procedure of an initial access.

The terminal sends the uplink data to the base station on a dedicated PUSCH resource configured by the base station.

In one embodiment, the dedicated PUSCH resource includes: a CG resource and/or a PUR.

In one embodiment, the uplink data may be sent or retransmitted by using the HARQ process.

In an embodiment, the terminal receives the resource configuration information for sending or retransmitting the uplink data configured by the base station for the terminal through signaling. Here, the signaling may be RRC signaling, MAC signaling, or DCI signaling.

In one embodiment, the resource configuration information includes at least one of the following:
an allocation period of a dedicated uplink resource;
an allocation starting position of the dedicated uplink resource; in which, the allocation starting position includes: a time domain position and/or a frequency domain position;
a total number of configured hybrid automatic repeat request (HARQ) processes;
a starting number of the configured HARQ processes.

In one embodiment, the terminal determines a resource position of the resource for sending or retransmitting the uplink data according to the allocation period of the dedicated uplink resource and the allocation starting position of the dedicated uplink resource.

In this way, the terminal can send or retransmit the uplink data at the resource position.

In one embodiment, the retransmission resource is a resource corresponding to a HARQ process used when sending the uplink data fails.

In one embodiment, the retransmission resource is a resource of any HARQ process among the multiple configured HARQ processes.

In one embodiment, the retransmission resource is a resource of any HARQ process among the configured HARQ processes which are not used.

In one embodiment, the retransmission resource is a resource indicated by a resource configuration corresponding to a resource used when sending the uplink data fails.

In one embodiment, the retransmission resource is a resource indicated by a candidate resource configuration in multiple sets of resource configurations; in which, an amount of data that can be sent by the resource indicated by the candidate resource configuration is the same as an amount of data that can be sent by the resource used when sending the uplink data fails.

In one embodiment, the retransmission resource is a resource indicated by any one of the multiple sets of resource configurations.

In one embodiment, the terminal may determine a process number of an available HARQ process corresponding to each uplink data channel sending resource based on the total number of configured HARQ processes and the starting number of the configured HARQ processes.

In this way, the uplink data can be sent or retransmitted by using the HARQ process.

In an embodiment, the configured retransmission resource may be indicated by configuration information sent by the base station to the terminal in the connected state.

In one embodiment, before the terminal retransmits the uplink data, the configuration information indicating the configured retransmission resource is received.

In one embodiment, in response to not receiving feedback information sent by the base station for the uplink data within a first time period after sending the uplink data, it is determined that sending the uplink data to the base station fails.

In one embodiment, the first time period may be a preconfigured time period.

In one embodiment, the first time period may also be a time period determined in real time according to a transmission scenario.

For example, if a delay requirement required by the real-time transmission scenario is greater than a quality threshold, the first time period may be set to A in real time.

In one embodiment, in response to receiving feedback information indicating that sending the uplink data fails sent by the base station, it is determined that sending the uplink data to the base station fails.

In one embodiment, the configured retransmission resource may be a pre-set retransmission resource before the retransmission.

In one embodiment, the configured retransmission resource may be a retransmission resource set in real time according to the transmission scenario.

For example, if a quality of service (QoS) requirement of the real-time transmission scenario is greater than a quality threshold, the retransmission resource may be set as the first resource in real time.

In the embodiment of the disclosure, in response to determining that sending the uplink data in the non-connected state fails, the uplink data is retransmitted on the configured retransmission resource. In this way, when the terminal fails to send the uplink data in the non-connected state, it can retransmit the uplink data on the configured retransmission resource. Compared with a way of failing to retransmit the uplink data when sending the uplink data in the non-connected state fails, a probability that a base station successfully receives the uplink data can be increased, an occurrence of a situation of loss of the uplink data may be reduced, thus improving a reliability of the terminal sending the uplink data in the non-connected state.

It should be noted that those skilled in the art can understand that the method provided in the embodiment of the present disclosure may be executed alone, or may be executed together with some methods in the embodiments of the present disclosure or some methods in related technologies.

As illustrated in FIG. 17, the embodiment provides a method for transmitting data. The method is applied to a base station and includes the following.

At step 17, retransmission configuration information is sent to a terminal.

The retransmission configuration information is at least used by the terminal to determine a number threshold.

In one embodiment, the number threshold may be determined according to a required delay of data transmission.

In one embodiment, in response to the required delay of data transmission being greater than a delay threshold, the number threshold is determined to be greater than A; in response to the required delay of data transmission being less than the delay threshold, the number threshold is determined to be less than A. In this way, the delay threshold can be adapted to the required delay of data transmission.

It should be noted that those skilled in the art can understand that the method provided in the embodiment of the present disclosure may be executed alone, or may be executed together with some methods in the embodiments of the present disclosure or some methods in related technologies.

In order to further understand any embodiment of the present disclosure, an exemplary embodiment is used to further illustrate the technical solution of the disclosure.

### Example 1

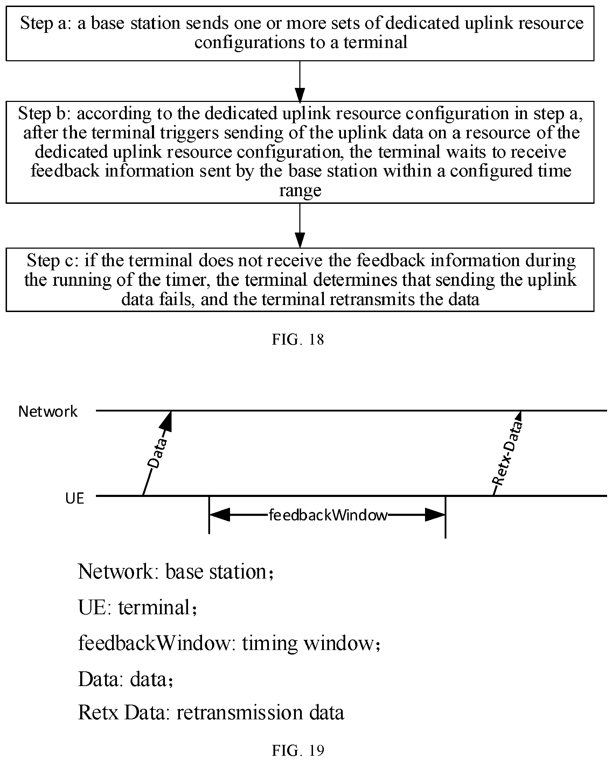

Referring to FIG. 18, the embodiment provides a method for transmitting data, and the method includes the following.

Step a: a base station sends one or more sets of dedicated uplink resource configurations to a terminal, for example, cg-Config-1 and cg-Config-2.

The dedicated uplink resource configuration is used for a terminal in an idle state or an inactive state to send uplink data.

Here, the base station may send the retransmission configuration information of the dedicated uplink resource to the terminal. Here, the dedicated uplink resource configuration may be sent through resource configuration information.

The retransmission configuration information includes at least one of the following information:
a number of retransmissions;
a total number of transmissions (for example, if the total number of transmissions is 4, the number of retransmissions is 3).

Here, the number of retransmissions may be a number threshold.

Step b: according to the dedicated uplink resource configuration in step a, after the terminal triggers sending of the uplink data on a resource of the dedicated uplink resource configuration, the terminal waits to receive feedback information sent by the base station within a configured time range.

Here, referring to FIG. 19, it may be that the terminal sends the uplink data through HARQ process-1 on the dedicated uplink resource indicated by cg-Config-1, and then the terminal starts a timer (e.g., feedbackWindow timer), and during running of the timer, the terminal receives the feedback information from the base station.

Step c: if the terminal does not receive the feedback information during the running of the timer, the terminal determines that sending the uplink data fails, and the terminal retransmits the data.

Here, referring to FIG. 19 again, the terminal retransmits the data (for example, Retx-Data) in the HARQ process HARQ-1 after the feedback window (feedbackWindow).

It should be noted that those skilled in the art can understand that the method provided in the embodiment of the present disclosure may be executed alone, or may be executed together with some methods in the embodiments of the present disclosure or some methods in related technologies.

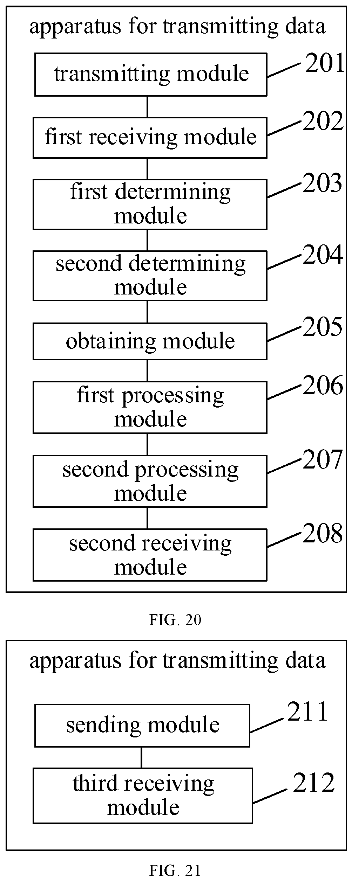

As illustrated in FIG. 20, the embodiment provides an apparatus for transmitting data. The apparatus is applied to a terminal and includes a retransmitting module 201.

The retransmitting module 201 is configured to, in response to determining that sending uplink data in a non-connected state fails, retransmit the uplink data on a configured retransmission resource.

The non-connected state comprises: an idle state or an inactive state.

In one embodiment, the apparatus further includes a first receiving module 202.

The first receiving module 202 is configured to, in a connected state, receive resource configuration information sent by a base station.

The resource configuration information is used for the terminal to determine a retransmission resource.

In one embodiment, the first receiving module 202 is configured to, the resource configuration information indicates at least one of the following information:
an allocation period of a dedicated uplink resource;
an allocation starting position of the dedicated uplink resource; in which, the allocation starting position includes: a time domain position and/or a frequency domain position;
a total number of configured hybrid automatic repeat request (HARQ) processes;
a starting number of the configured HARQ processes.

In one embodiment, the apparatus further includes a first determining module 203. The first determining module 203 is configured to:
determine that sending the uplink data to a base station fails, in response to not receiving feedback information sent by the base station for the uplink data within a first time period after sending the uplink data;
   and/or
determine that sending the uplink data to a base station fails, in response to receiving feedback information indicating that sending the uplink data fails sent by the base station.

In one embodiment, the retransmitting module 201 is further configured to:
retransmit the uplink data on the configured retransmission resource using a HARQ process.

In one embodiment, the retransmitting module 201 is further configured to:
retransmit the uplink data on a dedicated uplink resource using the HARQ process.

The dedicated uplink resource is a configured grant (CG) resource or a pre-allocated uplink resource (PUR).

In one embodiment, the retransmitting module 201 is further configured to, the dedicated uplink resource includes:
a dedicated uplink resource corresponding to a HARQ process used when sending the uplink data fails;
   or
a dedicated uplink resource corresponding to any one of a plurality of configured HARQ processes;
   or
a dedicated uplink resource corresponding to any one of configured HARQ processes which are not used.

In one embodiment, the apparatus further includes a second determining module 204. The second determining module 204 is configured to:
in response to a HARQ process not sending the uplink data, determine that the HARQ process is not used;
   or
in response to timeout of a timer for controlling running of a HARQ process, determine that the HARQ process is not used;
   or
in response to a stop of a timer for controlling running of a HARQ process, determine that the HARQ process is not used.

In one embodiment, the retransmitting module 201 is further configured to, the resource configuration information carries a plurality sets of resource configurations, and the dedicated uplink resource includes:
a dedicated uplink resource indicated by a resource configuration corresponding to a dedicated uplink resource used when sending the uplink data fails;
   or
a dedicated uplink resource indicated by a candidate resource configuration in the plurality sets of resource configurations, in which an amount of data that can be sent by the dedicated uplink resource indicated by the candidate resource configuration is the same as an amount of data that can be sent by the dedicated uplink resource used when sending the uplink data fails;
   or
a dedicated uplink resource indicated by any resource configuration in the plurality sets of resource configurations.

In one embodiment, the apparatus further includes an obtaining module 205. The obtaining module 205 is configured to:
obtain the uplink data from a first cache, in which the first cache is independent from a cache of a HARQ process.

In one embodiment, the retransmitting module 201 is further configured to:
in response to a number of times of retransmitting the uplink data being greater than or equal to a number threshold and the terminal being in the inactive state, switch to the idle state;
   or
in response to a number of times of retransmitting the uplink data being greater than or equal to a number threshold, trigger a connection establishment procedure;
   or
in response to a number of times of retransmitting the uplink data being greater than or equal to a number threshold, send the data using a third message Msg3 in a four-step random access procedure;
   or
in response to a number of times of retransmitting the uplink data being greater than or equal to a number threshold, send the data using a B message MsgB in a two-step random access procedure;
   or
in response to a number of times of retransmitting the uplink data being greater than or equal to a number threshold and the terminal being in the non-connected state, perform a cell reselection.

In one embodiment, the apparatus further includes a first processing module 206. The first processing module 206 is configured to:
in response to a number of times of retransmitting the uplink data using the third message Msg3 in the four-step random access procedure being greater than or equal to the number threshold and the terminal being in the inactive state, switch to the idle state;
   and/or
in response to a number of times of retransmitting the uplink data using the B message MsgB in the two-step random access procedure being greater than or equal to the number threshold and the terminal being in the inactive state, switch to the idle state.

In one embodiment, the apparatus further includes a second processing module 207. The second processing module 207 is configured to:
in response to a number of times of retransmitting the uplink data using the third message Msg3 in the four-step random access procedure being greater than or equal to the number threshold and the terminal being in the non-connected state, perform the cell reselection;
   and/or
in response to a number of times of retransmitting the uplink data using the second message MsgB in the two-step random access procedure being greater than or equal to the number threshold and the terminal being in the non-connected state, perform the cell reselection.

In one embodiment, the apparatus further includes a second receiving module 208. The second receiving module 208 is configured to:
receive retransmission configuration information sent by a base station, in which the retransmission configuration information is at least used by the terminal to determine the number threshold.

It should be noted that those skilled in the art can understand that the method provided in the embodiment of the present disclosure may be executed alone, or may be executed together with some methods in the embodiments of the present disclosure or some methods in related technologies.

As illustrated in FIG. 21, the embodiment provides an apparatus for transmitting data. The apparatus is applied to a base station and includes a sending module 211. The sending module 211 is configured to:
in a connected state, send resource configuration information to a terminal; in which the resource configuration information is used by the terminal to determine a retransmission resource for retransmitting uplink data when determining that sending the uplink data in a non-connected state fails.

In one embodiment, the sending module 211 is configured to, the resource configuration information indicates at least one of the following information:
an allocation period of a dedicated uplink resource;
an allocation starting position of the dedicated uplink resource; in which, the allocation starting position includes: a time domain position and/or a frequency domain position;
a total number of configured hybrid automatic repeat request (HARQ) processes;
a starting number of the configured HARQ processes.

In one embodiment, the apparatus further includes a third receiving module 212. The third receiving module 212 is configured to:
send retransmission configuration information to the terminal, in which the retransmission configuration information is at least used by the terminal to determine a number threshold for retransmitting the uplink data.

It should be noted that those skilled in the art can understand that the method provided in the embodiment of the present disclosure may be executed alone, or may be executed together with some methods in the embodiments of the present disclosure or some methods in related technologies.

Regarding the apparatus in the above-mentioned embodiment, the specific manner in which each module performs operations has been described in detail in the embodiment of the method, and will not be described in detail here.

Embodiments of the present disclosure provide a communication device, the communication device includes:
a processor; and
a memory for storing instructions executable by the processor.

The processor is configured to implement the method according to any of the embodiments of the disclosure when the executable instructions are executed.

The processor may include various types of storage media, which are non-transitory computer storage media that can continue to memorize and store information on the communication device after the power is turned off.

The processor can be connected to the memory through a bus or the like, and is used to read the executable program stored on the memory.

Embodiments of the present disclosure provide a computer storage medium having computer-executable instructions stored thereon. When computer-executable instructions are executed by a processor, the method according to any of the embodiments of the disclosure is implemented.

Regarding the apparatus in the above-mentioned embodiment, the specific manner in which each module performs operations has been described in detail in the embodiment of the method, and will not be described in detail here.

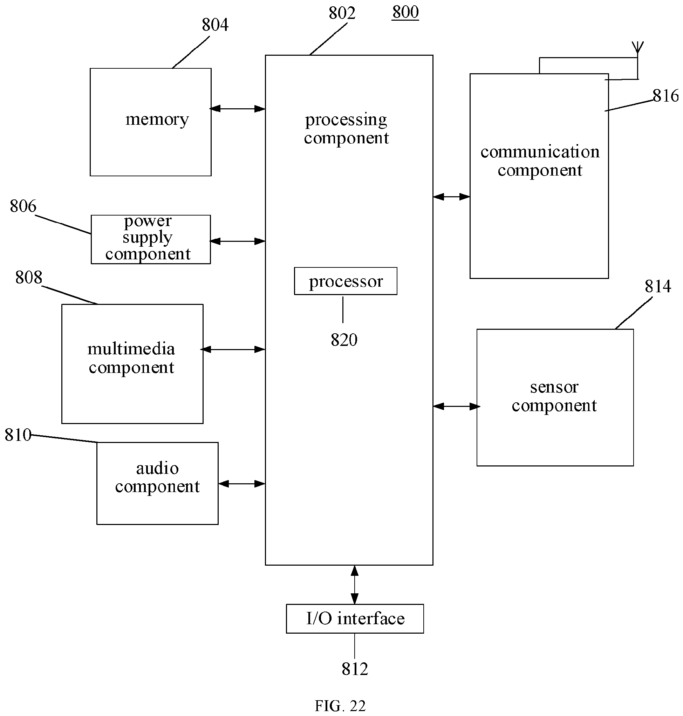

As illustrated in FIG. 22, the embodiment of the disclosure provides a structure of a terminal.

Referring to FIG. 22, the embodiment of the disclosure provides a terminal 800. The terminal may be a smart phone, a computer, a digital broadcast terminal, a messaging device, a game console, a tablet device, a medical device, a fitness device, a personal digital assistant, and the like.

As illustrated in FIG. 22, the terminal 800 may include one or more components: a processing component 802, a memory 804, a power supply component 806, a multimedia component 808, an audio component 810, an input/output (I/O) interface 812, a sensor component 814, and a communication component 816.

The processing component 802 generally controls the whole operation of the apparatus 800, such as the operations related to display, phone call, data communication, camera operation and recording operation. The processing component 802 may include one or more processors 820 to perform instructions, to complete all or part of steps of the above method. In addition, the processing component 802 may include one or more modules for the convenience of interaction between the processing component 802 and other components. For example, the processing component 802 may include a multimedia module for the convenience of interaction between the multimedia component 808 and the processing component 802.

The memory 804 is configured to store all types of data to support the operation of the apparatus 800. Examples of the data include the instructions of any applications or methods operated on the apparatus 800, contact data, phone book data, messages, pictures, videos, etc. The memory 804 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 may provide power for all components of the apparatus 800. The power supply component 806 may include power supply management system, one or more power supplies, and other units related to generating, managing and distributing power for the apparatus 800.

The multimedia component 808 includes a display screen of an output interface provided between the apparatus 800 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor may not only sense the boundaries of a touch or swipe action, but also detect the duration and pressure associated with the touch or swipe action. In some embodiments, the multimedia component 808 includes a front camera and/or a rear camera. When the apparatus 800 is in operation mode, such as shooting mode or video mode, the front camera or the rear camera may receive the external multimedia data. Each front camera and rear camera may be a fixed optical lens system or an optical lens system with a focal length and an optical zoom capacity.

The audio component 810 is configured as output and/or input signal. For example, the audio component 810 includes a microphone (MIC). When the apparatus 800 is in operation mode, such as call mode, record mode, and speech recognition mode, the microphone is configured to receive the external audio signals. The audio signals received may be further stored in the memory 804 or sent via the communication component 816. In some embodiments, the audio component 810 further includes a speaker configured to output an audio signal.

The I/O interface 812 provides an interface for the processing component 802 and the peripheral interface module, and the peripheral interface module may be a keyboard, a click wheel, a button, etc. The buttons may include but not limited to a home button, a volume button, a start button and a lock button.

The sensor component 814 includes one or more sensors, configured to provide various aspects of status assessment for the apparatus 800. For example, the sensor component 814 may detect the on/off state of the apparatus 800 and the relative positioning of the component. For example, the component is a display and a keypad of the apparatus 800. The sensor component 814 may further detect the location change of the apparatus 800 or one component of the apparatus 800, the presence or absence of contact between the user and the apparatus 800, the orientation or acceleration/deceleration of the apparatus 800, and the temperature change of the apparatus 800. The sensor component 814 may include a proximity sensor, which is configured to detect the existence of the objects nearby without any physical contact. The sensor component 814 may further include a light sensor such as CMOS or CCD image sensor, which is configured to use in imaging applications. In some embodiments, the sensor component 814 may further include an acceleration transducer, a gyroscope sensor, a magnetic sensor, a pressure sensor or a temperature sensor.

The communication component 816 is configured for the convenience of wire or wireless communication between the apparatus 800 and other devices. The apparatus 800 may access wireless networks based on a communication standard, such as Wi-Fi, 2G, or 3G, or their combination. In an exemplary embodiment, the communication component 816 receives broadcast signals or broadcast-related information from an external broadcast management system via a broadcast channel. In an exemplary embodiment, the communication component 816 further includes a near field communication (NFC) module to facilitate short-range communication. For example, an NFC module may be implemented based on a radio frequency identification (RFID) technology, an infrared data association (IRDA) technology, an ultrawideband (UWB) technology, Bluetooth (BT) technology and other technologies.

In an embodiment, the apparatus 800 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above.

In an exemplary embodiment, a non-transitory computer-readable storage medium is further provided which includes instructions, such as the memory 804 including instructions, in which the instructions may be executed by the processor 820 of the apparatus 800 to complete the above method. For example, the non-transitory computer-readable storage medium may be a ROM, a random access memory (RAM), a CD-ROM, a magnetic tape, a floppy disk, an optical data storage device, etc.

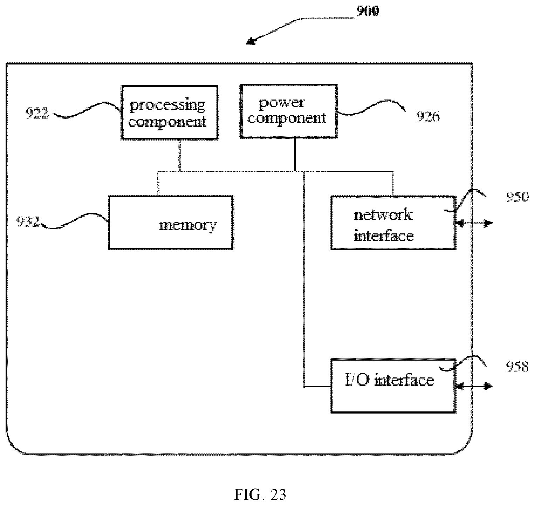

FIG. 23 is a block diagram of a base station 900 according to an embodiment of the disclosure. For example, the base station 900 may be provided as a network device. As illustrated in FIG. 23, the base station 900 includes a processing component 922, which includes one or more processors, and a memory resource represented by a memory 932 for storing instructions executable by the processing component 922, such as application programs. The application program stored in the memory 932 may include one or more modules, each module corresponds to a set of instructions. In addition, the processing component 922 is configured to execute instructions to perform the method described above and applied to the network side device.

The base station 900 may also include a power component 926 configured to perform power management of the base station 900, a wired or wireless network interface 950 configured to connect the base station 900 to the network, and an I/O interface 958. The base station 900 may operate based on an operating system stored on the memory 932, such as Windows Server TM, Mac OS XTM, UnixTM, LinuxTM, FreeBSDTM or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is inte nded that the scope of the disclosure only be limited by the appended claims.

## Claims

1. A method for transmitting data, applied to a terminal, comprising:
in response to determining that sending uplink data in a non-connected state fails, retransmitting the uplink data on a configured retransmission resource,
wherein the non-connected state comprises: an idle state or an inactive state.

2. The method of claim 1, further comprising:
in a connected state, receiving resource configuration information sent by a base station.

3. The method of claim 2, wherein the resource configuration information indicates at least one of the following information:
an allocation period of a dedicated uplink resource;
an allocation starting position of the dedicated uplink resource; wherein, the allocation starting position comprises: a time domain position and/or a frequency domain position;
a total number of configured hybrid automatic repeat request (HARQ) processes;
a starting number of the configured HARQ processes.

4. The method of claim 1, further comprising:
determining that sending the uplink data to a base station fails, in response to not receiving feedback information sent by the base station for the uplink data within a first time period after sending the uplink data;
and/or
determining that sending the uplink data to a base station fails, in response to receiving feedback information indicating that sending the uplink data fails sent by the base station.

5. The method of claim 1, wherein retransmitting the uplink data on the configured retransmission resource comprises:
retransmitting the uplink data on the configured retransmission resource using a HARQ process.

6. The method of claim 5, wherein retransmitting the uplink data on the configured retransmission resource using the HARQ process comprises:
retransmitting the uplink data on a dedicated uplink resource using the HARQ process;
wherein the dedicated uplink resource is a configured grant (CG) resource or a pre-allocated uplink resource (PUR).

7. The method of claim 6, wherein the dedicated uplink resource comprises:
a dedicated uplink resource corresponding to a HARQ process used when sending the uplink data fails;
or
a dedicated uplink resource for any one of a plurality of configured HARQ processes;
or
a dedicated uplink resource for any one of configured HARQ processes which are not used.

8. The method of claim 7, further comprising:
in response to a HARQ process not sending the uplink data, determining that the HARQ process is not used;
or
in response to timeout of a timer for controlling running of a HARQ process, determining that the HARQ process is not used;
or
in response to a stop of a timer for controlling running of a HARQ process, determining that the HARQ process is not used.

9. The method of claim 6, wherein the resource configuration information carries a plurality sets of resource configurations, and the dedicated uplink resource comprises:
a dedicated uplink resource indicated by a resource configuration corresponding to a dedicated uplink resource used when sending the uplink data fails;
or
a dedicated uplink resource indicated by a candidate resource configuration in the plurality sets of resource configurations, wherein an amount of data that can be sent by the dedicated uplink resource indicated by the candidate resource configuration is the same as an amount of data that can be sent by a dedicated uplink resource used when sending the uplink data fails;
or
a dedicated uplink resource indicated by any resource configuration in the plurality sets of resource configurations.

10. The method of claim 1, further comprising:
obtaining the uplink data from a first cache, wherein the first cache is independent from a cache of a HARQ process.

11. The method of claim 1, further comprising:
in response to a number of times of retransmitting the uplink data being greater than or equal to a number threshold and the terminal being in the inactive state, switching to the idle state;
or
in response to a number of times of retransmitting the uplink data being greater than or equal to a number threshold, triggering a connection establishment procedure;
or
in response to a number of times of retransmitting the uplink data being greater than or equal to a number threshold, sending the data using a third message Msg3 in a four-step random access procedure;
or
in response to a number of times of retransmitting the uplink data being greater than or equal to a number threshold, sending the data using a B message MsgB in a two-step random access procedure;
or
in response to a number of times of retransmitting the uplink data being greater than or equal to a number threshold and the terminal being in the non-connected state, performing a cell reselection.

12. The method of claim 11, further comprising:
in response to a number of times of retransmitting the uplink data using the third message Msg3 in the four-step random access procedure being greater than or equal to the number threshold and the terminal being in the inactive state, switching to the idle state;
and/or
in response to a number of times of retransmitting the uplink data using the B message MsgB in the two-step random access procedure being greater than or equal to the number threshold and the terminal being in the inactive state, switching to the idle state.

13. The method of claim 11, further comprising:
in response to a number of times of retransmitting the uplink data using the third message Msg3 in the four-step random access procedure being greater than or equal to the number threshold and the terminal being in the non-connected state, performing the cell reselection;
and/or
in response to a number of times of retransmitting the uplink data using the B message MsgB in the two-step random access procedure being greater than or equal to the number threshold and the terminal being in the non-connected state, performing the cell reselection.

14. The method of any of claims 11-13, further comprising:
receiving retransmission configuration information sent by a base station, wherein the retransmission configuration information is at least used by the terminal to determine the number threshold.

15. A method for transmitting data, applied to a base station, comprising:
in a connected state, sending resource configuration information to a terminal;
wherein, the resource configuration information is used by the terminal to determine a retransmission resource for retransmitting uplink data when determining that sending the uplink data in a non-connected state fails.

16. The method of claim 15, wherein the resource configuration information indicates at least one of the following information:
an allocation period of a dedicated uplink resource;
an allocation starting position of the dedicated uplink resource; wherein, the allocation starting position comprises: a time domain position and/or a frequency domain position;
a total number of configured hybrid automatic repeat request (HARQ) processes;
a starting number of the configured HARQ processes.

17. The method of claim 15, further comprising:
sending retransmission configuration information to the terminal, wherein the retransmission configuration information is at least used by the terminal to determine a number threshold for retransmitting the uplink data.

18. An apparatus for transmitting data, applied to a terminal, comprising a retransmitting module, wherein,
the retransmitting module is configured to, in response to determining that sending uplink data in a non-connected state fails, retransmit the uplink data on a configured retransmission resource;
wherein the non-connected state comprises: an idle state or an inactive state.

19. An apparatus for transmitting data, applied to a base station, comprising a sending module, wherein,
the sending module is configured to, in a connected state, send resource configuration information to a terminal;
wherein, the resource configuration information is used by the terminal to determine a retransmission resource for retransmitting uplink data when determining that sending the uplink data in a non-connected state fails.

20. A communication device, comprising:
an antenna;
a memory;
a processor, connected to the antenna and the memory, respectively, configured to control the antenna to receive and send and to perform the method according to any of claims 1-14 or any of claims 15-17 by executing computer-executable instructions stored on the memory.

21. A computer storage medium having computer-executable instructions stored thereon, wherein when the computer-executable instructions are executed by a processor, the method of any one of claims 1-14 or any one of claims 15 to 17 is implemented.
